# EUROPÄISCHE PATENTANMELDUNG

(11) **EP 1 867 965 A1**
(43) Veröffentlichungstag der Anmeldung: **19.12.2007**
(21) Anmeldenummer: 06012230.6
(22) Anmeldetag: 14.06.2006
(51) Int. Cl.: G01G 11/08

(54) **Verfahren und Vorrichtung zum gravimetrischen Dosieren von schütt-oder fliessfähigem Wägegut**

(71) Anmelder: SIEMENS AKTIENGESELLSCHAFT, 80333 München (DE)
(72) Erfinder: Kaszkin, Andreas, 76870 Kandel (DE); Kaszynski, Roman, Prof., 71-478 Szcecin (PL); Pietrzak, Przemyslaw, 72-099 Police (PL); Stiehl, Wolfgang, 76744 Wörth (DE)

(57) **Zusammenfassung**

Beim gravimetrischen Dosieren von schütt- oder fließfähigem Wägegut, wird das Wägegut über ein erstes steuerbares Stellglied in einen sich auf einer Wägeeinrichtung befindenden Behälter gefüllt wird, der über ein zweites steuerbares Stellglied entleert oder mittels des zweiten steuerbaren Stellgliedes auf die Wägeeinrichtung aufgebracht wird, wobei das Gewicht des Behälters mittels der Wägeeinrichtung erfasst wird.

Um mit einfachen Mitteln eine möglichst schnelle und genaue Dosierung zu ermöglichen, durchläuft das von der Wägeeinrichtung (2) gelieferte Wägesignal (m) ein Signalfilter (9), dessen Filtercharakteristik veränderbar ist und in Abhängigkeit von der Ansteuerung der Stellglieder (6,7) auf unterschiedliche vorgegebene Filtercharakteristiken angepasst wird.

## Beschreibung

Die Erfindung betrifft ein Verfahren und Vorrichtung zum gravimetrischen Dosieren von schütt- oder fließfähigem Wägegut.

Beim gravimetrischen Dosieren von schütt- oder fließfähigem Wägegut, wird dieses über ein erstes steuerbares Stellglied, z. B. ein Ventil oder eine Klappe, in einen sich auf einer Wägeeinrichtung befindenden Behälter gefüllt, wobei sich aus der Öffnungszeit und ggf. Öffnungsstellung des Stellglieds die Füll- bzw. Dosiermenge ergibt. Aus der Differenz der bei gefülltem und bei leerem Behälter gemessenen Gewichte wird die tatsächliche Dosiermenge ermittelt und bei Abweichung gegenüber einer vorgegebenen Soll-Dosiermenge die Öffnungszeit und ggf. Öffnungsstellung des ersten Stellglieds beim Füllen des Behälters korrigiert. Der Behälter kann Bestandteil der Wägeeinrichtung sein und nach jedem Füllen über ein Bodenventil oder dergleichen jeweils in eine Verpackung für das dosierte Wägegut entleert werden, oder es kann sich bei dem Behälter um die Verpackung selbst handeln, die mittels eines automatisierten Transportsystems auf die Wägeeinrichtung aufgebracht und nach dem Abfüllen entfernt wird.

Da die Wägeeinrichtung ein Feder-Masse-System bildet, weist das von ihr gelieferte Wägesignal aus der Dynamik des Füll- und Entladevorgangs resultierende Schwingungen auf. Zudem können Störungen, z. B. Vibrationen, das Wägesignal überlagern, weswegen es üblicherweise vor der weiteren Auswertung einer Tiefpass- oder Mittelwertfilterung unterzogen wird. Bei den dazu heute verwendeten Signalfiltern wird die Filtercharakteristik üblicherweise fest eingestellt, so dass sie während des gesamten Betriebsablaufs der Dosierung unverändert bleibt. Die Einstellung der Grenzfrequenz des Tiefpassfilters bzw. der Filterbreite des Mittelwertfilters stellt somit für den gesamten Dosiervorgang einen Kompromiss zwischen der Reaktionsgeschwindigkeit auf Signalveränderungen und der geforderten Messgenauigkeit dar. Es ist auch die Verwendung von adaptiven Signalfiltern bekannt, bei denen abhängig von dem Signalverlauf des gefilterten Signals die Filtercharakteristik verändert wird.

Der Erfindung liegt die Aufhabe zugrunde, mit einfachen Mitteln eine schnelle und genaue gravimetrische Dosierung zu ermöglichen.

Gemäß der Erfindung wird die Aufgabe durch die in Anspruch 1 angegebene Vorrichtung bzw. das in Anspruch 10 angegebene Verfahren gelöst.

Vorteilhafte Weiterbildungen der erfindungsgemäßen Vorrichtung bzw. des erfindungsgemäßen Verfahrens sind den Unteransprüchen zu entnehmen.

Gegenstand der Erfindung ist somit
eine Vorrichtung zum gravimetrischen Dosieren von schütt- oder fließfähigem Wägegut
- mit einem das Wägegut aufnehmenden Behälter,
- mit einer Wägeeinrichtung zur Erfassung des Gewichts des Behälters,
- mit einem ersten Stellglied zum Füllen des sich auf der Wägeeinrichtung befindenden Behälters mit dem Wägegut,
- mit einem zweiten Stellglied zum Entleeren des sich auf der Wägeeinrichtung befindenden Behälters oder zum Aufbringen des leeren Behälters auf die Wägeeinrichtung,
- mit einer Steuereinrichtung zum Erzeugen von Steuersignalen für die Stellglieder,
- mit einer Wägeeinrichtung zur Erfassung des Füllgewichts im Behälter,
- mit einem Signalfilter mit veränderbarer Filtercharakteristik zur Filterung des von der Wägeeinrichtung gelieferten Wägesignals, und
- mit einer von der Steuereinrichtung ansteuerbaren Filteranpasseinrichtung zum Anpassen der Filtercharakteristik in Abhängigkeit von den Steuersignalen auf unterschiedliche vorgegebene Filtercharakteristiken,
bzw.
ein Verfahren zum gravimetrischen Dosieren von schütt- oder fließfähigem Wägegut, das über ein erstes steuerbares Stellglied in einen sich auf einer Wägeeinrichtung befindenden Behälter gefüllt wird, der über ein zweites steuerbares Stellglied entleert oder mittels des zweiten steuerbaren Stellgliedes auf die Wägeeinrichtung aufgebracht wird, wobei das Gewicht des Behälters mittels der Wägeeinrichtung erfasst wird und das von der Wägeeinrichtung gelieferte Wägesignal ein Signalfilter durchläuft, dessen Filtercharakteristik veränderbar ist und in Abhängigkeit von der Ansteuerung der Stellglieder auf unterschiedliche vorgegebene Filtercharakteristiken angepasst wird.

Der Erfindung liegt die Erkenntnis zugrunde, dass eine exakte Gewichts- bzw. Massebestimmung nur zu bestimmten Zeitpunkten des Dosiervorgangs notwendig ist und dass diese Zeitpunkte nicht aus dem Signalverlauf des Wägesignals bestimmt werden müssen, sondern dass sie durch die Steuerung des Dosierablaufs vorgegeben und somit bekannt sind. Entsprechend wird die dynamische Anpassung der Signalfilterung von der Steuerung des Dosierablaufs mit gesteuert. Vorzugsweise wird das Wägesignal tiefpassgefiltert, wozu hier auch eine Mittelwertfilterung gerechnet wird. Dabei ist die Filtercharakteristik bezüglich der Grenzfrequenz veränderbar, was im Falle der Mittelwertfilterung der Filterbreite entspricht. Unter Filterbreite ist die Anzahl der zur Mittelwertbildung herangezogenen Stützwerte des Wägesignals zu verstehen. Darüber hinaus kann die Filtercharakteristik auch noch bezüglich des Filtertyps, z. B. Bessel- oder Butterworth-Filter und/oder der Filterordnung veränderbar sein.

Die von der Steuerung des Dosierablaufs zur Verfügung gestellten Zeitpunkte sind für den Fall, dass der Behälter Bestandteil der Wägeeinrichtung ist und nach jedem Füllen wieder entleert wird:
- das Öffnen des ersten Stellglieds zu Beginn der Füllphase, in der der Behälter mit dem Wägegut gefüllt wird,
- ggf. gegen Ende der Füllphase die Änderung der Öffnungsstellung des ersten Stellglieds zum Feindosieren,
- das Schließen des ersten Stellglieds am Ende der Füllphase,
- das Öffnen des zweiten Stellglieds zu Beginn der Entleerungsphase und
- das Schließen des zweiten Stellglieds am Ende der Entleerungsphase.

Wird bei jedem Dosiervorgang jedes Mal ein neuer Behälter gefüllt, so sind die Zeitpunkte:
- das Aufsetzen des leeren Behälters auf die Wägeeinrichtung,
- das Öffnen des ersten Stellglieds zu Beginn der Füllphase"
- ggf. gegen Ende der Füllphase die Änderung der Öffnungsstellung des ersten Stellglieds zum Feindosieren,
- das Schließen des ersten Stellglieds am Ende der Füllphase und
- das Entfernen des Behälters von der Wägeeinrichtung.

Die exakte Gewichts- bzw. Massebestimmung erfolgt jeweils am Ende der Füllphase und am Ende der (aktuellen oder vorangegangenen) Entleerungsphase bzw. beim Aufsetzen des leeren Behälters auf die Wägeeinrichtung. Dabei weist das Wägesignal jedes Mal erhebliche anfängliche Schwingungen auf, die durch das Füllen, Entleeren oder Aufsetzen des Behälters verursacht sind und mit der Zeit abklingen. Hinzu kommt, dass z. B. mit dem Schließen des ersten Stellglieds der Füllvorgang nicht auf einen Schlag beendet ist, da das unmittelbar hinter dem Stellglied befindliche Wägegut noch in den Behälter fallen muss. Um möglichst schnell den exakten Gewichts- bzw. Massewert zu erhalten, der dem Mittelwert des Wägesignals entspricht, wird in vorteilhafter Weise unmittelbar nach dem Füllen und Entleeren bzw. Aufsetzen des Behälters, z. B. gesteuert durch die entsprechenden Steuersignale für die Stellglieder, die Grenzfrequenz des als Tiefpassfilter ausgebildeten Signalfilters innerhalb einer vorgegebenen Zeit von einem vorgegebenen höheren Wert auf einen vorgegebenen niedrigeren Wert verändert. Im Falle eines Mittelwertfilters wird die Filterbreite von einem vorgegebenen niedrigeren Wert auf einen vorgegebenen höheren Wert verändert. Die Änderung folgt vorzugsweise einer vorgegebenen Zeitfunktion, beispielsweise exp -t/τ oder exp -(t/τ)², wobei t die Zeit und τ eine vorgegebene, z. B. parametrierbare, Zeitkonstante bezeichnen. Dadurch wird das Ausgangssignal des Signalfilters sehr schnell auf den Mittelwert des Wägesignals gebracht, der exakt das zu bestimmende Gewicht bzw. die zu bestimmende Masse wiedergibt. Die nach dem Füllen und Entleeren bzw. Aufsetzen des Behälters für die exakte Gewichts- bzw. Massebestimmung erforderliche Wartezeit ist somit entsprechend kurz, so dass die Phasen zum Füllen- und Entleeren des Behälters bzw. zum Aufsetzen, Füllen und Entfernen der Behälter schneller aufeinander folgen können und dadurch mehr Dosiervorgänge pro Zeiteinheit ausgeführt werden können.

Zur weiteren Erläuterung der Erfindung wird im Folgenden auf die Figuren der Zeichnung Bezug genommen; im Einzelnen zeigen:
- Figur 1: ein Beispiel für die erfindungsgemäße Vorrichtung,
- Figur 2: ein weiteres Beispiel für die erfindungsgemäße Vorrichtung,
- Figur 3: ein Beispiel für das während eines Dosiervorgangs erzeugte Wägesignal,
- Figur 4: ein Beispiel für die Filterung des Wägesignals nach der Entleerungsphase und
- Figur 5: ein Beispiel für das gefilterte Wägesignal während eines Dosiervorgangs.

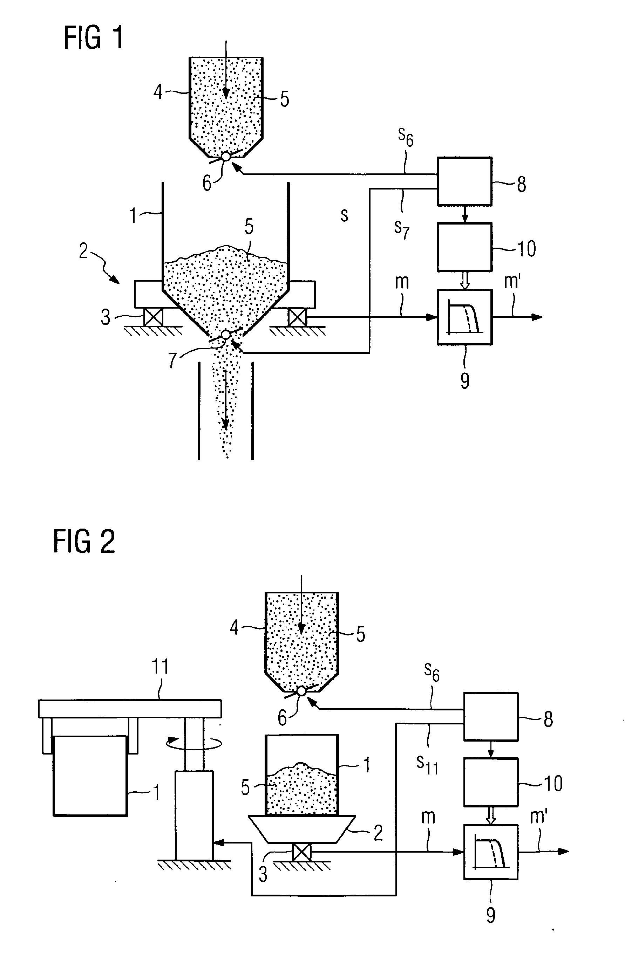

Figur 1 zeigt in sehr vereinfachter schematischer Darstellung eine Dosiervorrichtung mit einem Behälter 1, der auf einer Wägeeinrichtung 2 mit einer oder mehreren Wägezellen 3 gelagert ist. Über dem Behälter 1 ist eine Zuführvorrichtung 4 für zu dosierendes schütt- oder fließfähiges Wägegut 5 angeordnet. Die Zuführvorrichtung 4 weist ein Stellglied 6 auf, das zum Füllen des Behälters 1 mit dem Wägegut 5 geöffnet und anschließend geschlossen wird. Während der Füllphase kann durch unterschiedliche Stellungen des Stellglieds 6 der Mengenfluss gesteuert werden, so dass eine Grob- und anschließende Feindosierung des Wägegutes 5 möglich ist. Der Behälter 1 weist in seinem Bodenbereich ein zweites Stellglied 7 auf über das er zum Abfüllen des dosierten Wägegutes 5 beispielsweise in hier nicht gezeigte Verpackungen entleerbar ist.

Die Stellglieder 6 und 7 werden von einer Steuereinrichtung 8 automatisch gesteuert, die dazu zu vorgegebenen Zeitpunkten die Stellglieder 6, 7 öffnende bzw. schließende Steuersignale s₆ bzw. s₇ erzeugt. Die Wägeeinrichtung 2 erzeugt ein Wägesignal m, das in einem Signalfilter 9 mit veränderbarer Filtercharakteristik für die Weiterverarbeitung aufbereitet wird. Das Wägesignal m kann z. B. durch Aufsummieren der von den einzelnen Wägezellen 3 gelieferten Signale gebildet und ggf. verstärkt und digitalisiert werden (hier nicht dargestellt). Eine von der Steuereinrichtung 8 ansteuerbare Filteranpasseinrichtung 10 ermöglicht es, die Filtercharakteristik des Signalfilters 9 in Abhängigkeit von den Steuersignalen S₆ bzw. S₇ auf unterschiedliche vorgegebene Filtercharakteristiken anzupassen.

Das in Figur 2 gezeigte Ausführungsbeispiel unterscheidet sich von dem nach Figur 1 dadurch, dass die Verpackung für das Wägegut 5 den Behälter 1 bildet, wobei nach jedem Dosiervorgang der jeweils gefüllte Behälter 1 von der Wägeeinrichtung 2 entfernt und ein neuer, leerer Behälter 1 auf die Wägeeinrichtung 2 aufgebracht wird. Das zweite Stellglied 11 ist hier als automatisiertes Transport- oder Handhabungssystem ausgeführt, welches durch Steuersignale s₁₁ der Steuereinrichtung 8 gesteuert wird und den Behälterwechsel automatisch ausführt.

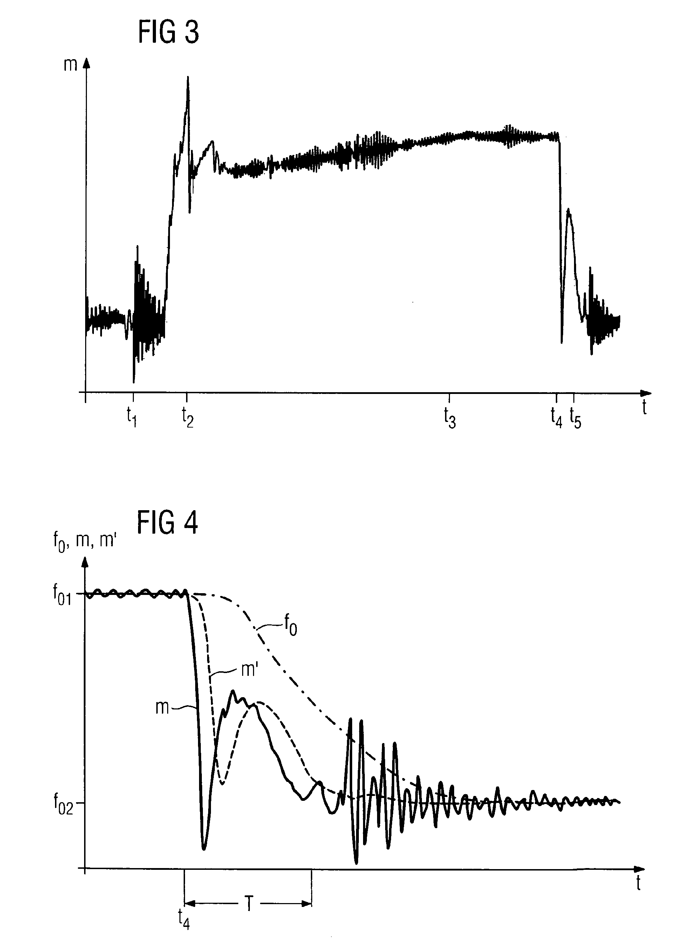

Figur 3 zeigt ein Beispiel für den zeitlichen Verlauf des von der in Figur 1 gezeigten Vorrichtung während eines Dosiervorgangs erzeugten Wägesignals m.

Zu einem Zeitpunkt t₁, der den Beginn der Füllphase bezeichnet, wird das erste Stellglied 6 geöffnet und der Behälter 1 mit dem Wägegut 5 gefüllt.

Zu einem späteren Zeitpunkt t₂ in der Füllphase wird die Öffnungsstellung des ersten Stellglieds 6 geändert, um ein Feindosieren zu ermöglichen.

Zu einem Zeitpunkt t₃ wird das erste Stellglied 6 geschlossen und damit die Füllphase beendet.

Zu einem Zeitpunkt t₄, der den Beginn der Entleerungsphase bezeichnet, wird das zweite Stellglied 7 geöffnet und der Behälter 1 entleert.

Anschließend wird zu einem Zeitpunkt t₅ das zweite Stellglied 7 wieder geschlossen.

Bei den aufeinanderfolgenden Dosiervorgängen werden die Zeitpunkte t₁ bis t₅ zyklisch durchlaufen.

Am Ende der Füllphase, also zwischen den Zeitpunkten t₃ und t₄, sowie am Ende der Entleerungsphase des aktuellen oder des vorangegangenen Dosierzyklus, also nach dem Zeitpunkt t₅ (ggf. auch vor dem Zeitpunkt t₅, wenn das Stellglied 7 erst unmittelbar vor der nächsten Füllphase wieder geschlossen wird), wird das Gewicht des Behälters 1 gemessen und aus der Gewichtsdifferenz bei gefülltem und leerem Behälter 1 die tatsächliche Dosiermenge (Masse) ermittelt.

Während der der Füllphase und der Entleerungsphase ist das Wägesignal m sehr stark durch das in den Behälter 1 fallende bzw. aus diesem heraus fallenden Wägegut 5 beeinflusst. Nach Beendigung der Füllphase und Entleerungsphase weist das Wägesignal m anfänglich jeweils erhebliche Schwingungen aufgrund des vorangegangenen Füll- bzw. Entladevorgangs auf, die mit der Zeit abklingen. Die Figur 3 zeigt deutlich, dass der Verlauf des Wägesignals m zwischen den verschiedenen Zeitpunkten t₁ bis t₅ jeweils sehr charakteristisch ist. Die Zeitpunkte t₁ bis t₅ sind von der Steuereinrichtung vorgegeben und werden daher benutzt, um die Filtercharakteristik des Signalfilters 9 optimal dem Verlauf des Wägesignals m zwischen den Zeitpunkten t₁ bis t₅ anzupassen. So muss die Reaktionsgeschwindigkeit des Signalfilters 9 bei hoher Dynamik des Wägesignals m, also während der Füll- und Entladungsphase, größer sein als in den Zeiten dazwischen, wenn das Füll- und Leergewicht des Behälters 1 bestimmt werden soll und dementsprechend das Signalfilter 9 nicht schnell reagieren sondern exakt filtern, insbesondere exakt den Mittelwert m' des Wägesignals m bilden soll. Die Steuerung der Filtercharakteristik des Signalfilters 9 anhand der von der Steuereinrichtung 8 gelieferten Steuersignale s₆ und s₇ bzw. Zeitpunkte t₁ bis t₅ ermöglicht somit eine schnelle Anpassung der Filtercharakteristik des Signalfilters 9 an den Verlauf des Wägesignals m.

Wie Figur 4 am Beispiel der Entleerungsphase zeigt, ist das Wägesignal m zunächst hauptsächlich durch das aus dem Behälter 1 fallende Wägegut 5 beeinflusst. Anschließend schwingt das von dem Behälter 1 und der Wägeeinrichtung 2 gebildete Feder-Masse-System mit seiner Eigenfrequenz um den Wert des Leergewichts des Behälters 1, wobei die anfangs hohe Schwingungsamplitude mit der Zeit abnimmt. Weitere Störsignale, wie von außen kommende Vibrationen, sind dem Wägesignal m überlagert. Um möglichst schnell das exakte Leergewicht des Behälters 1 zu erhalten, der dem Mittelwert des Wägesignals entspricht, wird zum Zeitpunkt t₄, wenn die Steuereinrichtung 8 das Steuersignal s₇ zum Öffnen des zweiten Stellglieds 7 erzeugt, die Grenzfrequenz f₀ des hier z. B. als Tiefpassfilter ausgebildeten Signalfilters 9 innerhalb einer vorgegebenen Zeit von einem vorgegebenen höheren Wert f₀₁ auf einen vorgegebenen niedrigeren Wert f₀₂ verändert. Die Änderung der Grenzfrequenz f₀ erfolgt dabei mit einer vorgegebenen Zeitfunktion, hier z. B. δ(t) = f₀₂ [1+ ((f₀₁- f₀₂) / f₀₂) exp- (t/τ) ²]. Damit wird das Ausgangssignal m' des Signalfilters 9 sehr schnell auf den Mittelwert des Wägesignals m gebracht, der exakt das zu bestimmende Leergewicht des Behälters 1 wiedergibt. Die nach dem Entleeren des Behälters 1 für die exakte Gewichtsbestimmung erforderliche Wartezeit ist somit sehr kurz, so dass die nächste Füllphase entsprechend früher erfolgen kann.

Die Anpassung der Filtercharakteristik des Signalfilters 9 nach der Füllphase zum Messen des Gewichts des gefüllten Behälters 1 erfolgt in entsprechender Weise, wobei wegen der höheren Masse des Feder-Masse-Systems das Frequenzniveau niedriger ist.

Im Falle des Ausführungsbeispiels nach Figur 2 ist der Verlauf des Wägesignals m bis zum Zeitpunkt t₄ praktisch identisch mit dem in Figur 3 gezeigten Signalverlauf. Zum Zeitpunkt t₄ wird dann der gefüllte Behälter 1 von der Wägeeinrichtung 2 abgehoben und anschließend, vor dem Zeitpunkt t1, ein neuer, leerer Behälter 1 aufgesetzt. Zunächst wird das Gewicht des leeren Behälters 1 und dann das des gefüllten Behälters 1 gemessen, um dann aus der Gewichtszunahme die Dosiermenge zu bestimmen. Die Gewichtsmessungen des leeren und gefüllten Behälters 1 sind daher durch die aus dem Aufsetzen des leeren Behälters 1 auf die Wägeeinrichtung 2 bzw. aus dem Füllen des Behälters 1 resultierenden Schwingungen beeinflusst, weswegen in der gleicher Weise, wie an Hand von Figur 4 beschrieben, durch Nachführen der Grenzfrequenz f₀ des Signalfilters 9 das Ausgangssignal m' des Signalfilters 9 schnell auf den Mittelwert des Wägesignals m gebracht wird.

Die Parameter für die unterschiedlichen Filtercharakteristiken des Signalfilters 9 sind in der Filteranpasseinrichtung 10, z. B. in Tabellenform, abgespeichert und können neben den verschiedenen Werten für die Grenzfrequenz auch unterschiedliche Filterfunktionen, z. B. Bessel- oder Butterworth-Filter oder unterschiedliche Filterordnungen umfassen.

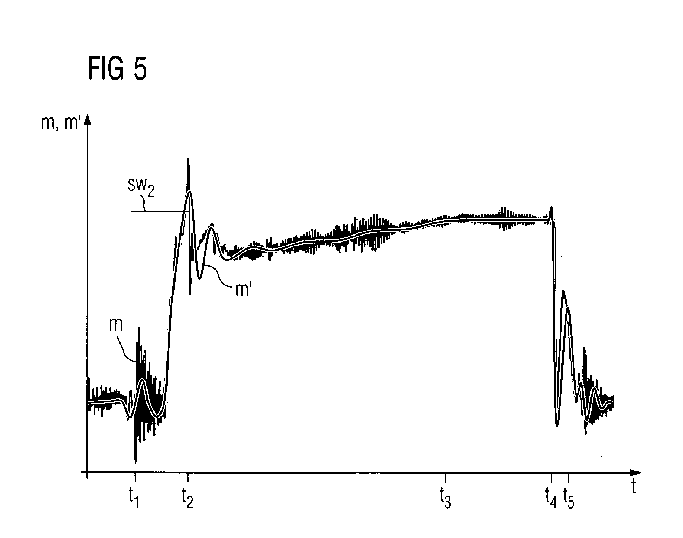

Das Füllen des Behälters 1 kann zeitgesteuert erfolgen, wobei der Zeitpunkt t₂, nach dem das Feindosieren erfolgt, und der Zeitpunkt t₃, zu dem der Füllvorgang beendet wird, durch die Steuereinrichtung 8 vorgegeben und in Abhängigkeit von der Gewichtsmessung korrigiert werden. Diese Zeitpunkte können aber auch, wie Figur 5 sehr vereinfacht und idealisiert zeigt, aus dem gefilterten Wägesignal m' bestimmt werden. Durch Anpassung der Filtercharakteristik des Signalfilters 9 an die Dynamik des Dosiervorgangs wird ein Verlauf des gefilterten Wägesignals m' erhalten, der eine für Dosierzwecke hinreichend genaue Bestimmung der Zeitpunkte t₂ und t₃ aus dem Signalverlauf m' ermöglicht, beispielsweise durch Vergleich mit einem Schwellenwert sw₂ oder durch Differenzierung und anschließenden Schwellenwertvergleich. Bei dem genannten Beispiel kann dann der Schwellenwert SW₂ in Abhängigkeit von dem Ergebnis der Gewichtsmessung des gefüllten und leeren Behälters 1 korrigiert werden.

## Patentansprüche

1. Vorrichtung zum gravimetrischen Dosieren von schütt- oder fließfähigem Wägegut (5)
- mit einem das Wägegut (5) aufnehmenden Behälter (1),
- mit einer Wägeeinrichtung (2) zur Erfassung des Gewichts des Behälters (1),
- mit einem ersten Stellglied (6) zum Füllen des sich auf der Wägeeinrichtung (2) befindenden Behälters (1) mit dem Wägegut (5),
- mit einem zweiten Stellglied (7, 11) zum Entleeren des sich auf der Wägeeinrichtung (2) befindenden Behälters (1) oder zum Aufbringen des leeren Behälters (1) auf die Wägeeinrichtung (2),
- mit einer Steuereinrichtung (8) zum Erzeugen von Steuersignalen (S₆, S₇) für die Stellglieder (6, 7, 11),
- mit einem Signalfilter (9) mit veränderbarer Filtercharakteristik zur Filterung des von der Wägeeinrichtung (2) gelieferten Wägesignals (m), und
- mit einer von der Steuereinrichtung (8) ansteuerbaren Filteranpasseinrichtung (10) zum Anpassen der Filtercharakteristik in Abhängigkeit von den Steuersignalen (s₆, s₇) auf unterschiedliche vorgegebene Filtercharakteristiken.

2. Vorrichtung nach Anspruch 1, **dadurch gekennzeichnet, dass** das Signalfilter (9) ein Tiefpassfilter ist.

3. Vorrichtung nach Anspruch 1 oder 2, **dadurch gekennzeichnet, dass** die Filtercharakteristik bezüglich der Grenzfrequenz (f₀) veränderbar ist.

4. Vorrichtung nach Anspruch 1, **dadurch gekennzeichnet, dass** das Signalfilter (9) ein Mittelwertfilter ist, dessen Filtercharakteristik bezüglich der Filterbreite veränderbar ist.

5. Vorrichtung nach einem der vorangehenden Ansprüche, **dadurch gekennzeichnet, dass** die Filtercharakteristik bezüglich des Filtertyps und/oder der Filterordnung veränderbar ist.

6. Vorrichtung nach Anspruch 1, **dadurch gekennzeichnet, dass** die Filteranpasseinrichtung (10) dazu ausgebildet ist, unmittelbar nach dem Füllen des Behälters (1) mit dem Wägegut (5) die Grenzfrequenz (f₀) des als Tiefpassfilter ausgebildeten Signalfilters (9) innerhalb einer vorgegebenen Zeit (τ) von einem vorgegebenen höheren Wert (f₀₁) auf einen vorgegebenen niedrigeren Wert (f₀₂) zu ändern.

7. Vorrichtung nach Anspruch 1 oder 6, **dadurch gekennzeichnet, dass** die Filteranpasseinrichtung (10) dazu ausgebildet ist, unmittelbar nach dem Entleeren des Behälters (1) oder nach dem Aufbringen des leeren Behälters (1) auf die Wägeeinrichtung (2) die Grenzfrequenz des als Tiefpassfilter ausgebildeten Signalfilters (9) innerhalb einer vorgegebenen Zeit (τ) von einem vorgegebenen höheren Wert (f₀₁) auf einen vorgegebenen niedrigeren Wert (f₀₂) zu ändern.

8. Vorrichtung nach Anspruch 1, **dadurch gekennzeichnet, dass** die Filteranpasseinrichtung (10) dazu ausgebildet ist, unmittelbar nach dem Füllen des Behälters (1) mit dem Wägegut (5) die Filterbreite des als Mittelwertfilter ausgebildeten Signalfilters (9) innerhalb einer vorgegebenen Zeit von einem vorgegebenen niedrigeren Wert auf einen vorgegebenen höheren Wert zu ändern.

9. Vorrichtung nach Anspruch 1 oder 8, **dadurch gekennzeichnet, dass** die Filteranpasseinrichtung (10) dazu ausgebildet ist, unmittelbar nach dem Entleeren des Behälters (1) oder nach dem Aufbringen des leeren Behälters (1) auf die Wägeeinrichtung (2) die Filterbreite des als Mittelwertfilter ausgebildeten Signalfilters (9) innerhalb einer vorgegebenen Zeit von einem vorgegebenen niedrigeren Wert auf einen vorgegebenen höheren Wert zu ändern.

10. Verfahren zum gravimetrischen Dosieren von schütt- oder fließfähigem Wägegut (5), das über ein erstes steuerbares Stellglied (6) in einen sich auf einer Wägeeinrichtung (2) befindenden Behälter (1) gefüllt wird, der über ein zweites steuerbares Stellglied (7) entleert oder mittels des zweiten steuerbaren Stellgliedes (11) auf die Wägeeinrichtung (2) aufgebracht wird, wobei das Gewicht des Behälters (1) mittels der Wägeeinrichtung (2) erfasst wird und das von der Wägeeinrichtung (2) gelieferte Wägesignal (m) ein Signalfilter (9) durchläuft, dessen Filtercharakteristik veränderbar ist und in Abhängigkeit von der Ansteuerung der Stellglieder (6, 7, 11) auf unterschiedliche vorgegebene Filtercharakteristiken angepasst wird.

11. Verfahren nach Anspruch 10, **dadurch gekennzeichnet, dass** das Wägesignal (m) in dem Signalfilter (9) tiefpassgefiltert wird.

12. Verfahren nach Anspruch 10 oder 11, **dadurch gekennzeichnet, dass** die Filtercharakteristik bezüglich der Grenzfrequenz (f₀) veränderbar ist.

13. Verfahren nach Anspruch 10, **dadurch gekennzeichnet, dass** das Wägesignal (m) in dem als Mittelwertfilter ausgebildeten Signalfilter (9) gemittelt wird und die Filtercharakteristik bezüglich der Filterbreite veränderbar ist.

14. Verfahren nach einem der Ansprüche 10 bis 13, **dadurch gekennzeichnet, dass** die Filtercharakteristik ferner bezüglich des Filtertyps und/oder der Filterordnung veränderbar ist.

15. Verfahren nach Anspruch 10, **dadurch gekennzeichnet, dass** unmittelbar nach dem Füllen des Behälters (1) mit dem Wägegut (5) die Grenzfrequenz (f₀) des als Tiefpassfilter ausgebildeten Signalfilters (9) innerhalb einer vorgegebenen Zeit (τ) von einem vorgegebenen höheren Wert (f₀₁) auf einen vorgegebenen niedrigeren Wert (f₀₂) verändert wird.

16. Verfahren nach Anspruch 10 oder 15, **dadurch gekennzeichnet, dass** unmittelbar nach dem Entleeren des Behälters (1) oder nach dem Aufbringen des leeren Behälters (1) auf die Wägeeinrichtung (2) die Grenzfrequenz des als Tiefpassfilter ausgebildeten Signalfilters (9) innerhalb einer vorgegebenen Zeit (τ) von einem vorgegebenen höheren Wert (f₀₁) auf einen vorgegebenen niedrigeren Wert (f₀₂) verändert wird.

17. Verfahren nach Anspruch 10, **dadurch gekennzeichnet, dass** unmittelbar nach dem Füllen des Behälters (1) mit dem Wägegut (5) die Filterbreite des als Mittelwertfilter ausgebildeten Signalfilters (9) innerhalb einer vorgegebenen Zeit von einem vorgegebenen niedrigeren Wert auf einen vorgegebenen höheren Wert verändert wird.

18. Verfahren nach Anspruch 10 oder 17, **dadurch gekennzeichnet, dass** unmittelbar nach dem Entleeren des Behälters (1) oder nach dem Aufbringen des leeren Behälters (1) auf die Wägeeinrichtung (2) die Filterbreite des als Mittelwertfilter ausgebildeten Signalfilters (5) innerhalb einer vorgegebenen Zeit von einem vorgegebenen niedrigeren Wert auf einen vorgegebenen höheren Wert verändert wird.
